# EUROPEAN PATENT APPLICATION

(11) **EP 4 729 412 A1**
(43) Date of publication of application: **22.04.2026**
(21) Application number: 25208266.4
(22) Date of filing: 13.10.2025
(51) Int. Cl.: B64D 9/00, B65G 13/075

(54) **ATTENUATED BRAKING ROLLER**

(30) Priority: 21.10.2024 US 202418921721
(71) Applicant: Goodrich Corporation, Charlotte, NC 28217-4578 (US)
(72) Inventor: SCHAFER, Ryan J., Jamestown, 58401 (US); LARSON, Wallace, Sauk Centre, 56378 (US)
(74) Representative: Dehns

(57) **Abstract**

An attenuated brake roller assembly is provided. The attenuated brake roller assembly comprises a base (202), a cam member (204), a brake roller (206), and a compression spring (208). The cam member (204) coupled to the base (202), wherein the cam member (204) is coupled to the base (202) via a shaft that allows the cam member (204) to rotate in a clockwise direction and counterclockwise direction. The brake roller (206) coupled to the cam member (204). The compression spring (208) is disposed within the base (202). The compression spring (208) is configured to act on the cam member (204) such that, responsive to the brake roller (206) translating in a first direction, a compression spring force provided by the compression spring (208) causes the brake roller (206) to translate in a second direction opposite the first direction.

## Description

### FIELD

The present disclosure generally relates to the field of cargo handling systems and, more particularly, to an attenuated braking roller withing a cargo handling system.

### BACKGROUND

Conventional aircraft cargo systems typically include various tracks and rollers that span the length of an aircraft. Cargo may be loaded from an aft position on an aircraft and conducted by the cargo system to a forward position and/or, depending upon aircraft configuration, cargo may be loaded from a forward position on an aircraft and conducted by the cargo system to an aft position. Cargo systems, such as those used by aircraft for transport of heavy containerized cargo or pallets, also referred to as unit load devices (ULDs), typically include roller trays containing conveyance rollers which support the cargo, motor driven rollers to propel cargo containers and pallets within the aircraft cargo compartment, and braking rollers to control the speed at which the cargo is moved within the aircraft cargo compartment. This configuration may allow for the transportation of cargo pallets within the aircraft cargo compartment by one or more operators controlling the PDUs.

### SUMMARY

An attenuated brake roller assembly is disclosed. The attenuated brake roller assembly includes a base, a cam member, a brake roller, and a compression spring. The cam member is coupled to the base. The cam member is coupled to the base via a shaft that allows the cam member to rotate in a clockwise direction and counterclockwise direction. The brake roller is coupled to the cam member. The compression spring is disposed within the base. The compression spring is configured to act on the cam member such that, responsive to the brake roller translating in a first direction, a compression spring force provided by the compression spring causes the brake roller to translate in a second direction opposite the first direction.

In various embodiments, the attenuated brake roller assembly further includes a cam interface. In various embodiments, the cam interface coupled to the compression spring and configured to interface with the cam member.

In various embodiments, the attenuated brake roller assembly further includes a slide pin. In various embodiments, the slide pin include a head portion and a slide void. In various embodiments, the cam interface includes a void and a countersunk portion. In various embodiments, the slide pin is configured to translate through the void in the cam interface such that the head portion of the slide pin is seated within the countersunk portion of the cam interface.

In various embodiments, the base comprises a void. In various embodiments, the compression spring is configured to be positioned with a first portion of the void in the base. In various embodiments, the slide pin is configured to pass through the compression spring in the first portion of the void in the base and into a second portion of the void in the base.

In various embodiments, the attenuated brake roller assembly further includes a retainer pin. In various embodiments, the retainer pin is configured to retain the slide pin in the void in the base.

In various embodiments, the cam member further comprises a stop. In various embodiments, the stop is configured to prevent the cam member from rotating opposite either the clockwise direction or the counterclockwise direction caused by the brake roller translating in the first direction past an installed configuration.

In various embodiments, the brake roller is configured to apply a braking force when rotated in a first rotational direction and free wheel when rotated in a second rotational direction opposite the first rotational direction.

Also disclosed herein is a cargo handling system. The cargo handling system includes a roller tray and an attenuated brake roller assembly disposed within the roller tray. The attenuated brake roller assembly includes a base, a cam member, a brake roller, and a compression spring. The cam member is coupled to the base. The cam member is coupled to the base via a shaft that allows the cam member to rotate in a clockwise direction and counterclockwise direction. The brake roller is coupled to the cam member. The compression spring is disposed within the base. The compression spring is configured to act on the cam member such that, responsive to the brake roller translating in a first direction, a compression spring force provided by the compression spring causes the brake roller to translate in a second direction opposite the first direction.

In various embodiments, the attenuated brake roller assembly further includes a cam interface. In various embodiments, the cam interface coupled to the compression spring and configured to interface with the cam member.

In various embodiments, the attenuated brake roller assembly further includes a slide pin. In various embodiments, the slide pin include a head portion and a slide void. In various embodiments, the cam interface includes a void and a countersunk portion. In various embodiments, the slide pin is configured to translate through the void in the cam interface such that the head portion of the slide pin is seated within the countersunk portion of the cam interface.

In various embodiments, the base comprises a void. In various embodiments, the compression spring is configured to be positioned with a first portion of the void in the base. In various embodiments, the slide pin is configured to pass through the compression spring in the first portion of the void in the base and into a second portion of the void in the base.

In various embodiments, the attenuated brake roller assembly further includes a retainer pin. In various embodiments, the retainer pin is configured to retain the slide pin in the void in the base.

In various embodiments, the cam member further comprises a stop. In various embodiments, the stop is configured to prevent the cam member from rotating opposite either the clockwise direction or the counterclockwise direction caused by the brake roller translating in the first direction past an installed configuration.

In various embodiments, the brake roller is configured to apply a braking force when rotated in a first rotational direction and free wheel when rotated in a second rotational direction opposite the first rotational direction.

Additionally disclosed herein is an aircraft. The aircraft includes a cargo deck and a cargo handling system disposed within the cargo deck. The cargo handling system includes a roller tray and an attenuated brake roller assembly disposed within the roller tray. The attenuated brake roller assembly includes a base, a cam member, a brake roller, and a compression spring. The cam member is coupled to the base. The cam member is coupled to the base via a shaft that allows the cam member to rotate in a clockwise direction and counterclockwise direction. The brake roller is coupled to the cam member. The compression spring is disposed within the base. The compression spring is configured to act on the cam member such that, responsive to the brake roller translating in a first direction, a compression spring force provided by the compression spring causes the brake roller to translate in a second direction opposite the first direction.

In various embodiments, the attenuated brake roller assembly further includes a cam interface. In various embodiments, the cam interface coupled to the compression spring and configured to interface with the cam member.

In various embodiments, the attenuated brake roller assembly further includes a slide pin. In various embodiments, the slide pin include a head portion and a slide void. In various embodiments, the cam interface includes a void and a countersunk portion. In various embodiments, the slide pin is configured to translate through the void in the cam interface such that the head portion of the slide pin is seated within the countersunk portion of the cam interface.

In various embodiments, the base comprises a void. In various embodiments, the compression spring is configured to be positioned with a first portion of the void in the base. In various embodiments, the slide pin is configured to pass through the compression spring in the first portion of the void in the base and into a second portion of the void in the base.

In various embodiments, the attenuated brake roller assembly further includes a retainer pin. In various embodiments, the retainer pin is configured to retain the slide pin in the void in the base.

In various embodiments, the cam member further comprises a stop. In various embodiments, the stop is configured to prevent the cam member from rotating opposite either the clockwise direction or the counterclockwise direction caused by the brake roller translating in the first direction past an installed configuration.

The present disclosure may include any one or more of the individual features disclosed above and/or below alone or in any combination thereof. The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIGS. 1A and 1B illustrates schematic views of an aircraft being loaded with ULDs, in accordance with various embodiments.
FIG. 1C illustrates a portion of a cargo handling system, in accordance with various embodiments.
FIG. 2A illustrates an attenuated brake roller assembly, in accordance with various embodiments.
FIG. 2B illustrates a cross sectional view of an attenuated brake roller assembly, in accordance with various embodiments.
FIG. 2C illustrates an enlarged view of portion of an attenuated brake roller assembly, in accordance with various embodiments.
FIGS. 3A and 3B illustrate a cross-sectional view of an attenuated brake roller assembly disposed within a roller tray of a cargo handling system in an aircraft, in accordance with various embodiments.
FIGS. 4A and 4B illustrate a view of roller tray of a cargo handling system in an aircraft in which an attenuated brake roller assembly may be disposed, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an," or "the" may include one or more than one and that reference to an item in the singular may also include the item in the plural. Further, all ranges may include upper and lower values and all ranges and ratio limits disclosed herein may be combined.

As stated previously, typical aircraft cargo systems include various tracks and rollers that span the length of an aircraft. Cargo may be loaded from an aft position on an aircraft and conducted by the cargo system to a forward position and/or, depending upon aircraft configuration, cargo may be loaded from a forward position on an aircraft and conducted by the cargo system to an aft position. Cargo systems, such as those used by aircraft for transport of heavy containerized cargo or pallets, also referred to as unit load devices (ULDs), typically include roller trays containing conveyance rollers which support the cargo, motor driven rollers to propel cargo containers and pallets within the aircraft cargo compartment, and braking rollers to control the speed at which the cargo is moved within the aircraft cargo compartment. This configuration may allow for the transportation of cargo pallets within the aircraft cargo compartment by one or more operators controlling the PDUs.

Typically, the braking rollers that control the speed at which the cargo is moved within the aircraft cargo compartment require sufficient normal force to ensure the braking roller rolls with the ULD versus the ULD sliding across the braking element. Accordingly, disclosed herein is an attenuated braking roller that extends the roller above a conveyor plane of the cargo deck and provides for the weight exerted by the ULD on the braking roller to increase. In various embodiments, the force exerted by the ULD on the attenuated braking roller allows the attenuated braking roller to increase the brake force on the ULD. In various embodiments, the attenuated solution provided by the attenuated braking roller tends to improve the longevity of the attenuated braking roller.

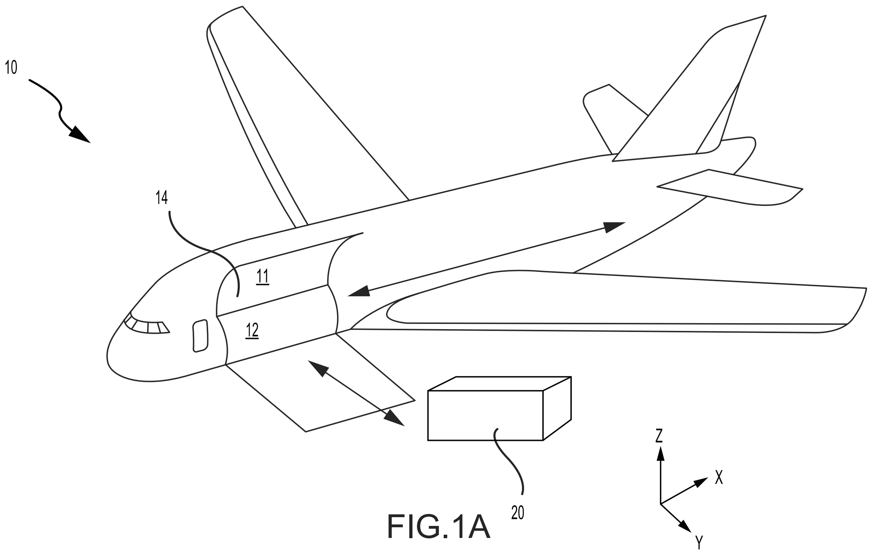

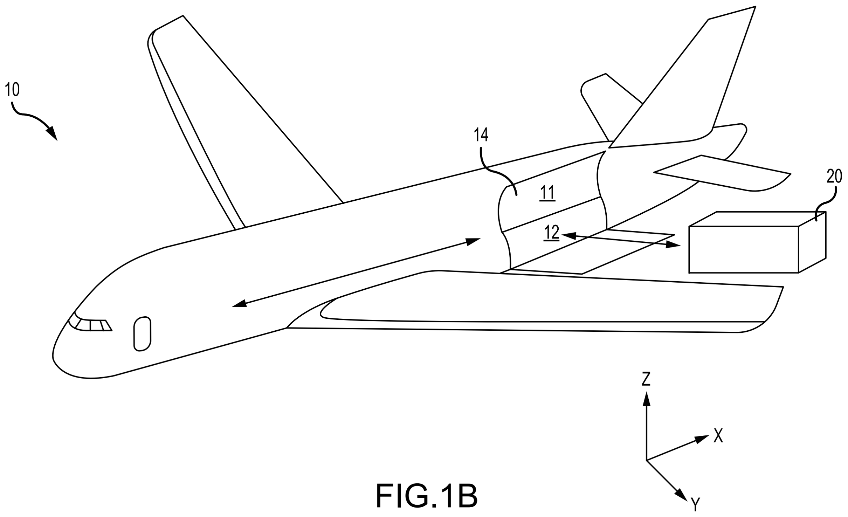

With reference to FIGS. 1A and 1B, a schematic view of an aircraft 10 having a cargo deck 12 located within a cargo compartment 14 is illustrated, in accordance with various embodiments. The aircraft 10 may include a cargo load door 16 located, for example, at one side of a fuselage structure of the aircraft 10. As illustrated in FIG. 1A, the cargo load door 16 is located at a forward position on the aircraft 10 such that cargo may be loaded from a forward position on an aircraft and conducted by the cargo system to an aft position. As illustrated in FIG. 1B, the cargo load door 16 is located at a forward position on the aircraft 10 such that cargo may be loaded from an aft position on an aircraft and conducted by the cargo system to a forward position. A unit load device (ULD) 20, in the form of a container or pallet, for example, may be loaded through the cargo load door 11 and onto the cargo deck 12 of the aircraft 10 or, conversely, unloaded from the cargo deck 12 of the aircraft 10. In general, ULDs are available in various sizes and capacities, and are typically standardized in dimension and shape. Once loaded with items destined for shipment, the ULD 20 is transferred to the aircraft 10 and then loaded onto the aircraft 10 through the cargo load door 11 using a conveyor ramp, scissor lift or the like. Once inside the aircraft 10, the ULD 20 is moved within the cargo compartment 14 to a final stowed position. Multiple ULDs may be brought on-board the aircraft 10, with each ULD 20 being placed in a respective stowed position on the cargo deck 12. After the aircraft 10 has reached its destination, each ULD 20 is unloaded from the aircraft 10 in similar fashion, but in reverse sequence to the loading procedure. To facilitate movement of the ULD 20 along the cargo deck 12, the aircraft 10 may include a cargo handling system as described herein in accordance with various embodiments.

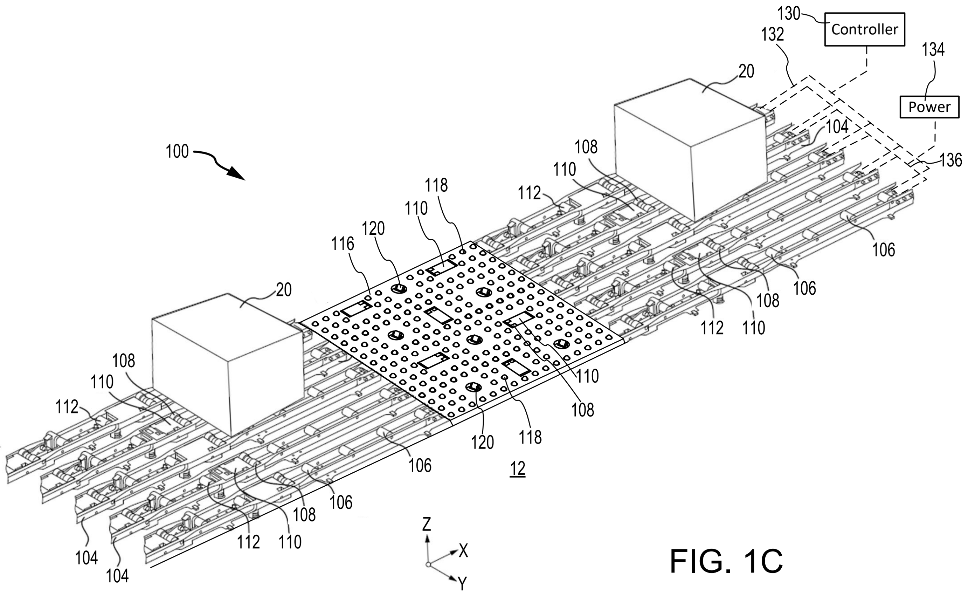

Referring now to FIG. 1C, a portion of a cargo deck, such as cargo deck 12 of FIGS. 1A and 1B, is illustrated with XYZ axes for ease of illustration, in accordance with various embodiments. Cargo deck 12 includes cargo handling system 100. Cargo handling system may include one or more ball panels 116 and one or more roller trays 104. Ball panels 116 may include a plurality of freely rotating conveyance balls 118. Roller trays 104 include a plurality of freely rotating conveyance rollers 106. Roller trays 104 may be positioned longitudinally along cargo deck 12. In various embodiments, a number of PDUs 110 may be mounted along cargo deck 12. For example, PDUs 110 may be located in ball panels 116 and/or in roller trays 104. PDUs 110 are configured to propel cargo over freely rotating conveyance balls 118 and the freely rotating conveyance rollers 106 and across cargo deck 12.

PDUs 110 include one or more drive rollers 108, which may be actively controlled by a motor. PDUs 110, including drive rollers 108, provide a mechanism upon which the ULD 20 is propelled over the freely rotating conveyance rollers 106. The ULD 20 may contact the drive rollers 108 of PDUs 110 located within the roller trays 104 to provide motive force for the ULD 20. Each of PDUs 110 may include an actuator, such as an electrically operated motor, which drives one or more drive rollers 108. In various embodiments, a drive roller 108 may be raised by a PDU of PDUs 110 from a lowered position beneath the conveyance surface 102 to an elevated position above conveyance surface 102. As used with respect to cargo handling system 100, the term "beneath" may refer to the negative z-direction, and the term "above" may refer to the positive z-direction with respect to the provided XYZ axes. In the elevated position, the drive roller 108 contacts and drives the overlying the ULD 20 that rides on the freely rotating conveyance rollers 106. In accordance with various embodiments, the drive roller 108 may be held or biased in a position above the conveyance surface by a spring.

In various embodiments, a number of brake rollers 112 may be located along cargo deck 18. For example, brake rollers 112 may be mounted in roller trays 104. In various embodiments, one or more brake caster(s) 120 may be coupled to ball panels 116. Stated differently, ball panels 116 may include brake caster(s) 120. Each of brake casters 120 may be configured to swivel (or rotate) relative to ball panels 116, thereby by allowing each of brake casters 120 to align with the direction of movement of the ULD 20 over ball panels 116. In various embodiments, brake rollers 112 and brake casters 120 are configured to rotate freely in a first circumferential direction and restrict rotation in the opposite circumferential direction. In this regard, brake rollers 112 and brake casters 120 may slow or prevent translation of cargo across cargo deck 12 in certain directions.

Cargo handling system 100 may include a system controller 130 in communication with the PDUs 110 via a plurality of channels 132. Channels 132 may be a data bus, such as a controller area network (CAN) bus and may include one or more CAN busses or multi-CANs. In various embodiments, an operator may provide instructions to PDUs 110 via the system controller 130. In that regard, in various embodiments, cargo handling system 100 may receive operator input through system controller 130 to instruct PDUs 110 to manipulate the ULD 20 into a desired position on cargo deck 12. However, in various embodiments, each of the PDUs 110 may not activate until communication is established by an adjacent, or substantially adjacent, one of PDUs 110, as described hereafter. In that regard, system controller 130 and PDUs 110 may each include a general-purpose processor, a digital signal processor (DSP), an application specific integrated circuit (ASIC), a field programmable gate array (FPGA) or other programmable logic device, discrete gate or transistor logic, discrete hardware components, or any combination thereof.

System program instructions and/or controller instructions may be loaded onto a tangible, non-transitory, computer-readable medium (also referred to herein as a tangible, non-transitory, memory) having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals *per se.* Stated another way, the meaning of the term "non-transitory computer-readable medium" and "non-transitory computer-readable storage medium" should be construed to exclude only those types of transitory computer-readable media which were found in *In Re Nuijten* to fall outside the scope of patentable subject matter under 35 U.S.C. § 101. Additionally, in various embodiments, the cargo handling system 100 may also include a power source 134 configured to supply power to the PDUs 110, brake rollers 112, and/or other components of cargo handling system 100 via one or more power busses 136.

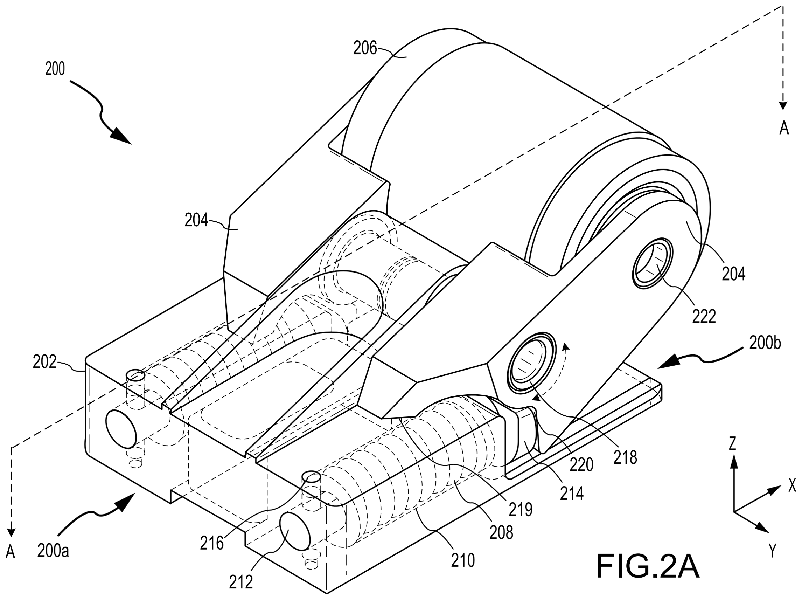

In various embodiments, brake rollers 112 may be attenuated brake rollers. Referring now to FIG. 2A, an attenuated brake roller assembly is illustrated, in accordance with various embodiments. In various embodiments, the attenuated brake roller assembly 200 includes a base 202, cam members 204, and a brake roller 206. In various embodiments, the base 202 includes, on both sides in the y-direction, a compression spring 208 disposed within void 210 in the base 202. In various embodiments, the compression spring 208 is retained within the void 210 via a slide pin 212. In various embodiments, the slide pin 212 includes a head portion on a first end of the slide pin 212 that, in response to a shaft of the slide pin 212 being slid through a void in a cam interface 214, interfaces with a countersunk portion of the cam interface 214. In that regard, the cam interface 214 includes a void that is configured to receive and allow the shaft of the slide pin 212 to move through the void. Additionally, the cam interface 214 includes a countersunk portion, associated with the void, that is configured to receive the head portion of the slide pin 212.

In various embodiments, the slide pin 212 includes on a second end of the slide pin 212 opposite the first end, a slide void, which is perpendicular to a length of the shaft of the slide pin 212. In various embodiments, the slide void in the slide pin 212 is configured to, once the slide pin 212 is slid through the cam interface 214 and the compression spring 208 in the void 210 of the base 202, receive a retainer pin 216 that retains the slides pin 212 and the compression spring 208 within the void 210 and is configured to allow the slide pin 212 to slide in a x-direction.

In various embodiments, each cam member of the cam members 204 is configured to be coupled to either side of the base 202 via a tube shaft 218. In that regard, once the cam members 204 are coupled to the base 202 via the tube shaft 218, the cam members 204 are configured to pivot about the tube shaft 218 in clockwise and counterclockwise directions. In various embodiments, the cam members 204 are configured with a stop 219 that, responsive to the cam members 204 rotating in a counterclockwise direction with respect to the illustration, contacts a top portion of the base 202 and prevents the cam members 204 from rotating further in the counterclockwise direction past an installed configuration. In various embodiments, a first lower end of the cam members 204 are configured with, on both sides in the x-direction, a face 220 that interfaces with the cam interface 214. In various embodiments, the brake roller 206 is coupled to the cam members 204 on a second end opposite the first end of the cam members 204. In various embodiments, the cam members 204 may be mounted onto the ends of the inner shaft 222 of the brake roller 206 prior to the cam members 204 being mounted to the attenuated brake roller assembly 200 via the tube shaft 218. In various embodiments, the brake roller 206 includes a skewed roller arrangement that includes a clutch such that the brake roller 206 is configured to apply a braking force when a ULD is moving in a downhill direction, i.e. from a position higher in a z-direction to a position lower in the z-direction as the ULD traverses the cargo deck in a negative x-direction, and free wheels or runs free when the ULD is moving in an uphill direction, i.e. from a position lower in a z-direction to a position higher in the z-direction as the ULD traverses the cargo deck in a positive x-direction. In various embodiments, typically a nose or forward end of aircraft in which that brake roller 206 is installed is lower than a tail of aft end of the aircraft. Accordingly, in various embodiments where a forward end of the aircraft is lower in a z-direction than an aft end of the aircraft, a first end 200a of the attenuated brake roller assembly 200 may be positioned toward the forward end of the aircraft and a second end 200b of the attenuated brake roller assembly 200 may be positioned toward the aft end of the aircraft. Conversely, in various embodiments where the forward end of the aircraft is higher in a y-direction than the aft end of the aircraft, the first end 200a of the attenuated brake roller assembly 200 may be positioned toward the aft end of the aircraft and the second end 200b of the attenuated brake roller assembly 200 may be positioned toward the forward end of the aircraft.

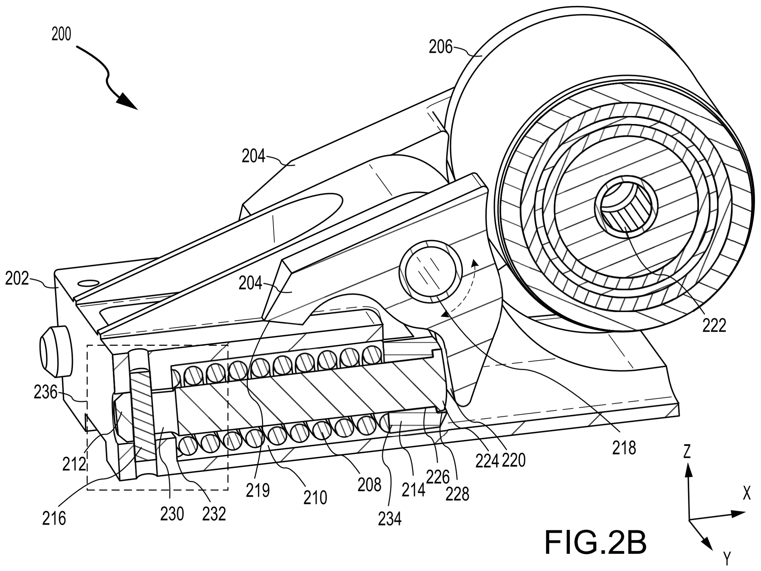

Referring now to FIG. 2B, a cross sectional view along line A-A of an attenuated brake roller assembly is illustrated, in accordance with various embodiments. In various embodiments, the attenuated brake roller assembly 200 includes the base 202, the cam members 204, and the brake roller 206. In various embodiments, the base 202 includes, on both sides in the y-direction, the compression spring 208 disposed within the void 210 in the base 202. In various embodiments, the compression spring 208 is retained within the void 210 via the slide pin 212. In various embodiments, the slide pin 212 includes a head portion 224 on a first end of the slide pin 212 that, in response to a shaft of the slide pin 212 being slid through a void 226 in a cam interface 214, interfaces with a counterbore portion 228 of the cam interface 214. In that regard, the cam interface 214 includes the void 226 that is configured to receive and allow the shaft of the slide pin 212 to move through the void 226. Additionally, the cam interface 214 includes the counterbore portion 228, associated with the void 226, that is configured to receive the head portion 224 of the slide pin 212.

In various embodiments, the slide pin 212 includes on a second end of the slide pin opposite 212 the first end, a slide void 230, which is perpendicular to the length of the shaft of the slide pin 212. In various embodiments, the slide void 230 in the slide pin 212 is configured to, once the slide pin 212 is slid through the cam interface 214 and the compression spring 208 in the void 210 of the base 202, receive the retainer pin 216 that retains the slide pin 212 and the compression spring 208 within the void 210 and is configured to allow the slide pin 212 to slide in a x-direction. In that regard, in various embodiments, the void 210 includes two portions of different dimensions. In various embodiments, a first portion of the void 210 is of a first dimension to contain the compression spring 208 and the slide pin 212 and a second portion of the void 210 is of a second dimension to contain only the slide pin 212. Accordingly, in various embodiments, the first portion of the void 210 is configured to provide a first abutment 232 for a first end of the compression spring 208. In that regard, the cam interface 214 provides a second abutment 234 for a second end of the compression spring 208.

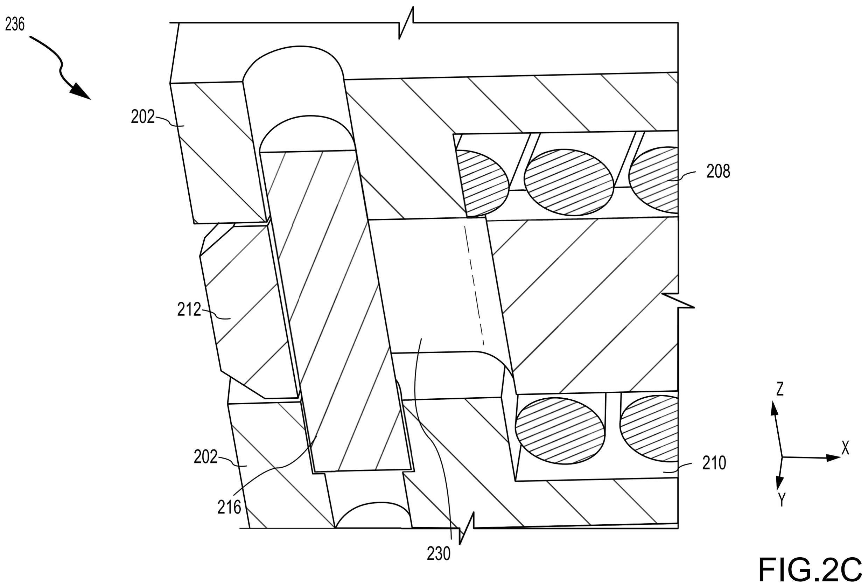

Referring now to FIG. 2C, an enlarged view of portion 236 of FIG. 2B of an attenuated brake roller assembly is illustrated, in accordance with various embodiments. In various embodiments, the slide pin 212 includes on a second end of the slide pin opposite 212 the first end, the slide void 230, which is perpendicular to the length of the shaft of the slide pin 212. In various embodiments, the slide void 230 in the slide pin 212 is configured to, once the slide pin 212 is slid through the cam interface and the compression spring 208 in the void 210 of the base, receive the retainer pin 216 that retains the slide pin 212 and the compression spring 208 within the void 210 and is configured to allow the slide pin 212 to slide in a x-direction.

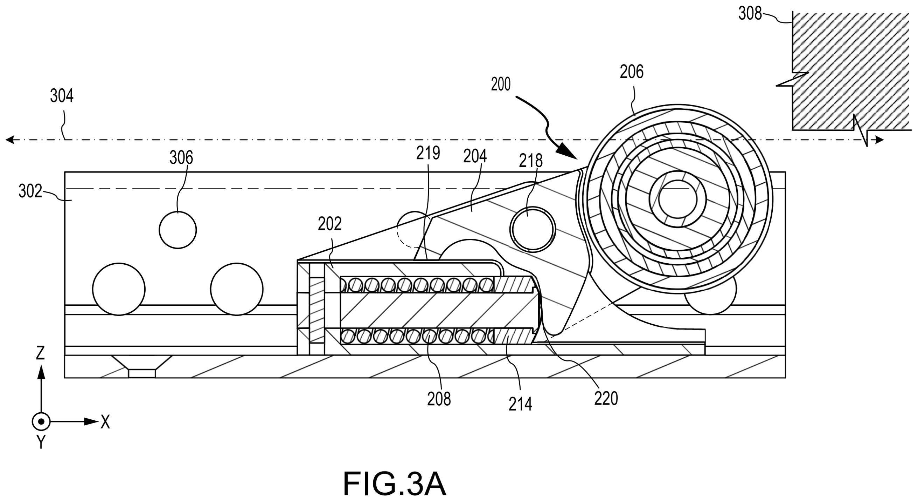

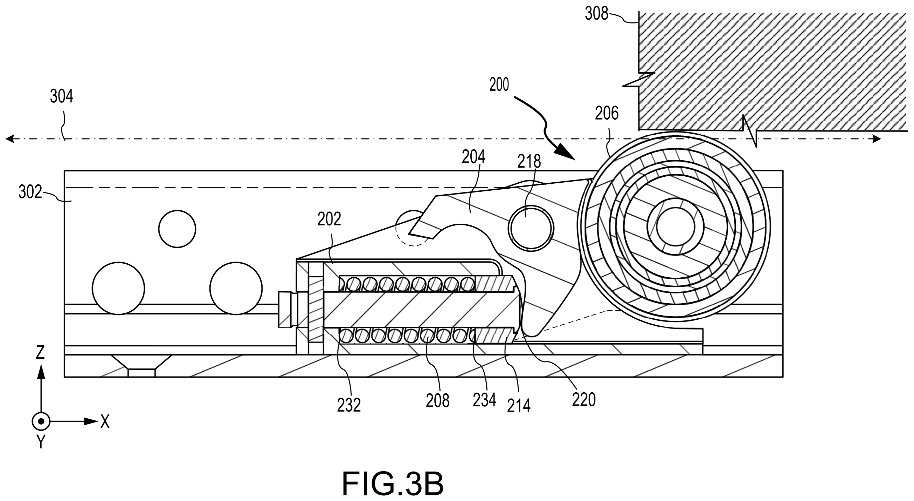

Referring now to FIGS. 3A and 3B, a cross-sectional view of an attenuated brake roller assembly disposed within a roller tray of a cargo handling system in an aircraft is illustrated, in accordance with various embodiments. In various embodiments, as illustrated in FIG. 3A, the attenuated brake roller assembly 200 may be positioned within a roller tray 302, such as one of roller trays 104 of FIG. 1C. In various embodiments, the attenuated brake roller assembly 200 may be coupled to the roller tray 302 via a pin that slides though a first hole on one side of the roller tray 302 though the tube shaft 218 and into a second hole, similar to hole 306, on a second side of the roller tray 302. In various embodiments, in an installed configuration, i.e. not in contact with a unit load device (ULD) 308, the brake roller 206 is fully extended in a positive z-direction above the conveyance floor 304. In various embodiments, the brake roller 206 is prevented from extending further past the installed configuration in the positive z-direction due to a stop 219 that is configured to contact a top portion of the base 202. In that regard, a spring force exerted by compression spring 208 on cam interface 214 and thus, on face 220 of cam members 204 causes an upward force, i.e. in a positive z-direction, of the brake roller 206 above the conveyance floor 304.

In various embodiments, as illustrated in FIG. 3B, as the ULD 308 comes into contact with the attenuated brake roller assembly 200, the brake roller 206 is forced downward, in a negative z-direction. In various embodiments, by forcing the brake roller 206 downward, the cam members 204, to which the brake roller 206 is coupled, is rotated clockwise about the tube shaft 218 thereby forcing the cam interface 214, via face 220, to translate in a negative x-direction which compresses the compression spring 208. However, in various embodiments, the spring force provided by the compression spring 208 pushing off the first abutment 232 and onto second abutment 234 and thus, forcing the cam interface 214, via face 220, to cause a counterclockwise rotation of the cam members 204 about the tube shaft 218 is configured to provide a vertical force on the brake roller 206 that causes the brake roller 206 to stay in contact with the ULD 308 and thus provide a tractive force via the brake roller 206 on the ULD 308.

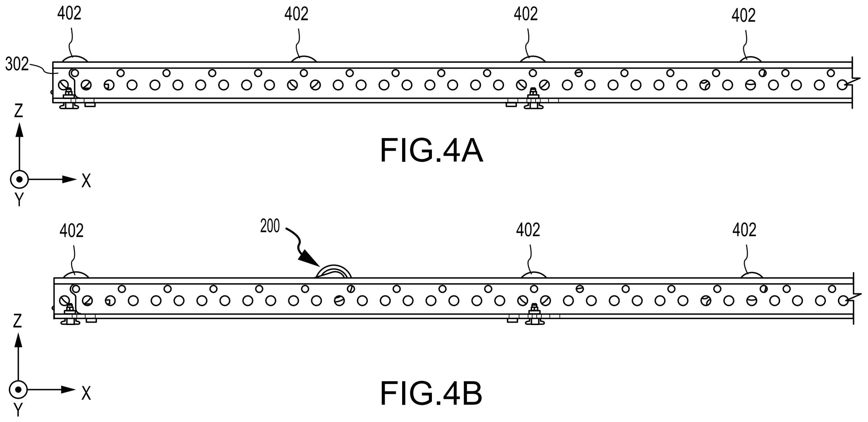

Referring now to FIGS. 4A and 4B, a view of roller tray of a cargo handling system in an aircraft in which an attenuated brake roller assembly may be disposed is illustrated, in accordance with various embodiments. In various embodiments, as is illustrated in FIG. 4A, roller tray 302 comprises a plurality of freely rotating conveyance rollers 402, such as freely rotating conveyance rollers 106 of FIG. 1C. In various embodiments, as is illustrated in FIG. 4B, one of the freely rotating conveyance rollers 402 has been replaced by an attenuated brake roller assembly 200, such as that described in FIGS. 2A, 2B, 2C, 3A, and 3B. In various embodiments, the freely rotating conveyance roller 402 may be removed by removing a pin that slides though a first hole on one side of the roller tray 302 through a tube shaft in the freely rotating conveyance roller 402 and into a second hole on a second side of the roller tray 302 and the brake roller assembly may be installed by sliding the pin through the first hole on one side of the roller tray 302 though the tube shaft on the attenuated brake roller assembly 200 and into a second hole on a second side of the roller tray 302.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. An attenuated brake roller assembly, the attenuated brake roller assembly comprising:
a base (202);
a cam member (204), the cam member (204) coupled to the base (202), wherein the cam member (204) is coupled to the base (202) via a shaft that allows the cam member (204) to rotate in a clockwise direction and counterclockwise direction;
a brake roller (206), the brake roller (206) coupled to the cam member (204); and
a compression spring (208) disposed within the base (202), wherein the compression spring (208) is configured to act on the cam member (204) such that, responsive to the brake roller (206) translating in a first direction, a compression spring force provided by the compression spring (208) causes the brake roller (206) to translate in a second direction opposite the first direction.

2. The attenuated brake roller assembly of claim 1, further comprising:
a cam interface (214), the cam interface (214) coupled to the compression spring (208) and configured to interface with the cam member (204).

3. The attenuated brake roller assembly of claim 2, further comprising:
a slide pin (212), the slide pin (212) include a head portion and a slide void,
wherein the cam interface (214) includes a void and a countersunk portion, and
wherein the slide pin (212) is configured to translate through the void in the cam interface (214) such that the head portion of the slide pin (212) is seated within the countersunk portion of the cam interface (214).

4. The attenuated brake roller assembly of claim 3,
wherein the base (202) comprises a void,
wherein the compression spring (208) is configured to be positioned with a first portion of the void in the base (202), and
wherein the slide pin (212) is configured to pass through the compression spring (208) in the first portion of the void in the base (202) and into a second portion of the void in the base (202).

5. The attenuated brake roller assembly of claim 4, further comprising:
a retainer pin, wherein the retainer pin is configured to retain the slide pin (212) in the void in the base (202).

6. The attenuated brake roller assembly of any preceding claim,
wherein the cam member (204) further comprises a stop, and
wherein the stop is configured to prevent the cam member (204) from rotating opposite either the clockwise direction or the counterclockwise direction caused by the brake roller (206) translating in the first direction past an installed configuration.

7. The attenuated brake roller assembly of any preceding claim,
wherein the brake roller (206) is configured to apply a braking force when rotated in a first rotational direction and free wheel when rotated in a second rotational direction opposite the first rotational direction.

8. A cargo handling system, comprising:
a roller tray; and
an attenuated brake roller assembly, as claimed in any preceding claim, disposed within the roller tray.

9. An aircraft, comprising:
a cargo deck; and
a cargo handling system, as claimed in claim 8, disposed within the cargo deck.
